# EUROPÄISCHE PATENTANMELDUNG

(11) **EP 4 600 129 A1**
(43) Veröffentlichungstag der Anmeldung: **13.08.2025**
(21) Anmeldenummer: 25150411.4
(22) Anmeldetag: 07.01.2025
(51) Int. Cl.: B62J 7/04, B62J 27/30, B62J 1/14

(54) **FAHRRAD-LASTENTRÄGER MIT SICHERHEITSBÜGEL**

(30) Priorität: 08.02.2024 DE 202024100639 U
(71) Anmelder: AT Zweirad GmbH, 48341 Altenberge (DE)
(72) Erfinder:
(74) Vertreter: Patentanwälte Olbricht Buchhold Keulertz

(57) **Zusammenfassung**

Die Erfindung betrifft einen Fahrrad-Lastenträger (1) mit einer zur Aufnahme von Ladung bestimmten Ladeplattform (2) und mit einem Sicherheitsbügel (5). Der Fahrrad-Lastenträger (1) ist schwenkbar gelagert, wobei der Sicherheitsbügel (5) in wenigstens einer Schwenkstellung wahlweise formschlüssig arretierbar oder aus dem Formschluss lösbar ist.

## Beschreibung

Die Erfindung betrifft einen Fahrrad-Lastenträger.

Fahrrad-Lastenträger sind in Form von fest mit dem Fahrrad verbundenen Gestellen bekannt, z. B. als Frontgepäckträger mit einer aus mehreren Streben gebildeten Ladeplattform, die sich oberhalb des Vorderrades befindet, oder als Heckgepäckträger, dessen Ladeplattform sich oberhalb des Hinterrades befindet. Fahrrad-Lastenträger können als separate Gestelle ausgestaltet sein, die mit dem Fahrradrahmen verbunden werden, z. B. verschraubt werden, oder sie können unmittelbar durch einen entsprechend verlaufenden Fahrradrahmen gebildet werden.

Ein gattungsgemäßer Fahrrad-Lastenträger ist in den Ausgestaltungen als Front- oder als Heckgepäckträger bekannt, indem nämlich ein grundsätzlich als Heckgepäckträger konzipierter Fahrrad-Lastenträger in einer um 180° umgedrehten Ausrichtung als Frontgepäckträger montiert wird. In beiden Fällen weist der Fahrrad-Lastenträger eine so genannte Federklappe auf, nämlich einen schwenkbaren, im Wesentlichen U-förmigen Sicherheitsbügel, der federbelastet auf der Ladeplattform des Front- oder Heckgepäckträgers aufliegt und gegen die Federwirkung von der Ladeplattform abgehoben werden kann. Auf der Ladeplattform befindliches Gepäck kann durch den federbedingten Anpressdruck mittels des Sicherheitsbügels auf der Ladeplattform gehalten werden.

Der Erfindung liegt die Aufgabe zugrunde, einen gattungsgemäßen Fahrrad-Lastenträger dahingehend zu verbessern, dass die Ladung besonders zuverlässig auf dem Fahrrad-Lastenträger gesichert werden kann.

Diese Aufgabe wird durch einen Fahrrad-Lastenträger nach Anspruch 1 gelöst. Vorteilhafte Ausgestaltungen sind in den Unteransprüchen beschrieben.

Der relevante Fahrrad-Lastenträger weist eine zur Aufnahme von Ladung bestimmte Ladeplattform und einen Sicherheitsbügel auf, der schwenkbar gelagert ist. Erfindungsgemäß ist der Sicherheitsbügel in wenigstens einer Schwenkstellung wahlweise formschlüssig arretierbar oder aus dem Formschluss lösbar.

Die Erfindung schlägt mit anderen Worten einen variabel einstellbaren Sicherheitsbügel vor, der zwar über einen weiten Bereich schwenkbar ist, aber in wenigstens einer Schwenkstellung - und vorzugsweise in zwei oder mehr Schwenkstellungen - formschlüssig arretierbar ist. Anders als bei einem federbelasteten Bügel wird somit eine besonders zuverlässige Sicherung der Ladung ermöglicht, denn eine Kraft, die für die Bewegung eines federbelasteten Bügels ausreichen würde, um den Sicherungsbügel von der Ladung weg zu schwenken, reicht nicht aus, um den arretierten erfindungsgemäß ausgestalteten Sicherungsbügel aus der arretierten Schwenkstellung heraus zu bewegen.

Insbesondere bei Fahrrädern, mit denen schwerere Ladung - z. B. auch Personen, insbesondere in Form von Kindern - transportiert werden sollen, kann der erfindungsgemäß ausgestaltete Fahrrad-Lastenträger vorteilhaft angewendet werden. Die schweren Lasten könnten ansonsten allein aufgrund ihrer Massenträgheit zur Überwindung der Federkraft führen, mit welcher ein ausschließlich federbelasteter Sicherungsbügel die Ladung auf der Ladeplattform zu halten bestrebt ist. Der Sicherheitsbügel jedoch auch aus dem Formschluss entnommen werden, so dass er in eine andere Schwenkstellung geführt werden kann. Dies kann entweder eine sogenannte freie Stellung sein, in welcher der Sicherheitsbügel nicht arretiert ist und aus welcher er daher ohne weiteres herausbewegt werden kann, z.B. wenn der Sicherheitsbügel eine möglichst weit nach unten geschwenkte Stellung einnimmt, in der er allein aufgrund seines Eigengewichts gehalten ist. Dies kann jedoch auch eine andere Schwenkstellung sein, in welcher der Sicherheitsbügel ebenfalls arretiert werden kann.

Der Sicherheitsbügel eines erfindungsgemäß ausgestalteten Fahrrad-Lastenträgers ermöglicht eine flexible Anpassung an unterschiedliche Ladungsformen. Zum Be- oder Entladen kann zudem der Sicherheitsbügel in eine Schwenkstellung bewegt werden, in welcher er den Vorgang möglichst wenig beeinträchtigt, z. B. indem er ein barrierefreies Auf- oder Absteigen von Passagieren ermöglicht, so dass im Ergebnis die Erfindung eine vielseitige und unkomplizierte Nutzung des Fahrrads unterstützt, welches mit einem erfindungsgemäß ausgestalteten Fahrrad-Lastenträger ausgestattet ist.

Bei den gattungsgemäßen Fahrrad-Lastenträgern verläuft die Schwenkachse der Federklappe quer zur Längsachse des Fahrrads, wenn sich der Fahrrad-Lastenträger im Gebrauch befindet, nämlich wenn er am Fahrrad montiert ist. Auch ein erfindungsgemäßer Fahrrad-Lastenträger kann einen Sicherheitsbügel aufweisen, der um eine quer zum Fahrrad verlaufende Schwenkachse beweglich ist. In einer Ausgestaltung jedoch, die als besonders vorteilhaft angesehen wird, verläuft die Schwenkachse, um welche der Sicherheitsbügel schwenkbar ist, im Gebrauch in Längsrichtung des Fahrrads. Somit eignet sich der Sicherheitsbügel insbesondere zur Anwendung an einem länglichen Fahrrad-Lastenträger, der sich in Längsrichtung des Fahrrads erstreckt. Dies kann beispielsweise eine Ladeplattform oder eine Ladewanne bei einem Lastenfahrrad in "long-John" Bauart sein, oder ein Heckgepäckträger bei einem Lastenfahrrad in "long tail"-Bauart, so dass über die ganze Länge des jeweiligen Fahrrad-Lastenträgers der Sicherheitsbügel einen konstanten, optimal an die Ladung angepassten Abstand zur Ladeplattform einnehmen kann.

Um den Sicherheitsbügel aus seiner arretierten Schwenkstellung herausbewegen zu können, weist der Fahrrad-Lastenträger in einer vorteilhaften Ausgestaltung zumindest ein Sicherungselement auf, welches seinerseits zwischen einer Sicherungsstellung und einer Freigabestellung beweglich ist. Die Beweglichkeit ist derart, dass der Sicherheitsbügel in einer Schwenkstellung, in welcher er arretiert ist, mittels des sich in seiner Sicherungsstellung befindlichen Sicherungselementes gesichert ist und nur lösbar ist, nachdem das Sicherungselement seine Freigabestellung eingenommen hat. In der Sicherungsstellung bleibt der Sicherheitsbügel in seiner arretierten Schwenkstellung arretiert. Erst wenn das Sicherungselement in seine Freigabestellung bewegt worden ist, kann die Arretierung aufgehoben werden und der Sicherheitsbügel aus seiner arretierten Schwenkstellung in eine andere Schwenkstellung bewegt werden. Das Sicherungselement kann beispielsweise als Riegelstift, als Blockade-Anschlag oder dergleichen ausgestaltet sein.

Bevorzugt ist der Sicherheitsbügel mittels des zumindest einen Sicherungselementes in mehreren unterschiedlichen Schwenkstellungen zu sichern. Besonders bevorzugt ist der Sicherheitsbügel in zumindest drei oder vier unterschiedlichen Schwenkstellungen zu sichern. Dadurch sind unterschiedliche geformte Ladungsformen zuverlässig zu sichern. Pro Schwenkstellung und bevorzugt auch pro Sicherungselement weist der Fahrrad-Lastenträger bevorzugt eine Sicherungsausnehmung zur Aufnahme des Sicherungselementes auf, die insbesondere ortsfest relativ zur Ladeplattform ausgebildet ist. Die Sicherungsausnehmungen sind bevorzugt einheitlich ausgebildet, um die Ladungssicherung in einheitlicher Qualität zu erreichen. Bevorzugt ist eine mittlere erste Sicherungsausnehmung im Falle von zumindest drei Sicherungsausnehmungen von einer zweiten und einer dritten Sicherungsausnehmung umgeben und bezogen auf die Schwenkachse relativ zur zweiten Sicherungsausnehmung um einen kleineren Winkel versetzt angeordnet als relativ zur dritten Sicherungsausnehmung. Dadurch ist der Lastenträger an typische Belastungssituationen angepasst, ohne die Zahl der Sicherungsausnehmungen unverhältnismäßig hoch wählen zu müssen.

Das Sicherungselement ist bevorzugt zumindest anteilig, insbesondere ausschließlich, radial oder axial bezogen auf die Schwenkachse zwischen der Sicherungsstellung und der Freigabestellung beweglich. Mit anteilig axial und radial ist beispielsweise eine Bewegungsrichtung gemeint, die relativ zur Schwenkachse um weniger als 90° angewinkelt ist. Neben einer rein radialen Beweglichkeit ist auch eine derartige anteilig radiale Beweglichkeit möglich, dass die Bewegungsrichtung parallel zur Radialen ist. Vorzugsweise ist das Sicherungselement ausschließlich translatorisch beweglich gelagert.

Besonders vorteilhaft kann nicht nur ein einziges Sicherungselement vorhanden sein, sondern der Sicherheitsbügel kann zwei solche Sicherungselemente aufweisen. Diese sind bevorzugt dazu eingerichtet, dass sie nur bei gleichzeitiger Betätigung in ihre jeweilige Freigabestellung die Bewegung des Sicherheitsbügels aus seiner arretierten Schwenkstellung ermöglichen. Ein langer Sicherungsbügel kann auf diese Weise beispielsweise an seinen beiden Enden dementsprechend gesichert werden. Für den Personentransport ergibt sich der zusätzliche Vorteil einer kindersicheren Verriegelung, da bis zu einem gewissen Entwicklungsstadium die Kinder nicht in der Lage sind, beide Sicherungselemente synchron zu handhaben und den Sicherungsbügel somit aus seiner arretierten Schwenkstellung zu lösen. Je nach Länge des Sicherungsbügels kann hinzukommen, das unabhängig vom Entwicklungsstadium der Kinder ein bestimmter Abstand zwischen den beiden Sicherungselementen bei einer entsprechenden Körpergröße der Kinder verhindert, dass die beiden Sicherungselemente gleichzeitig erfasst und betätigt werden können.

In einer Ausgestaltung verläuft der Sicherheitsbügel im Wesentlichen U-förmig und weist an seinen beiden Enden jeweils ein Sicherungselement auf. Auch unabhängig davon sind die beiden Sicherungselemente vorzugsweise in dieselbe Richtung oder in unterschiedliche, insbesondere entgegengesetzte, Richtungen von ihrer jeweiligen Sicherungsstellung in ihre jeweilige Freigabestellung beweglich. Dadurch lässt sich wahlweise die Handhabung vereinfachen oder die Sicherheit gegen ein unbeabsichtigtes Lösen der Arretierung erhöhen. Die Sicherheit ist alternativ oder zusätzlich durch eine bevorzugt vorhandene Feder, bevorzugt eine Feder pro Sicherungselement, zu erhöhen, wobei das Sicherungselement insbesondere gegen die Wirkung der Feder in die Freigabestellung führbar oder geführt ist und insbesondere im Einsatz durch die Feder in der Sicherungsstellung gehalten ist.

Die Arretierung des schwenkbaren Sicherheitsbügels erfolgt in einer ersten Ausgestaltung einerseits mittels einer Kulisse, die wenigstens eine als Vertiefung ausgebildete Sicherungsausnehmung aufweist, und andererseits mittels eines als Vorsprung ausgebildeten Sicherungselementes, der relativ zu der Kulisse beweglich ist, so dass in einer bestimmten Schwenkstellung des Sicherheitsbügels der Vorsprung in die Vertiefung eingreift und der Sicherheitsbügel auf diese Weise in dieser Schwenkstellung arretiert ist. Der Vorsprung kann beispielsweise federbelastet der Kulisse anliegen, so dass er automatisch in die Vertiefung eindringt, sobald sich der Sicherheitsbügel in der entsprechenden Schwenkstellung befindet. Die Kulisse ist bevorzugt von dem Sicherheitsbügel oder einem Plattformrahmen umfasst, der insbesondere ortsfest relativ zur Ladeplattform angeordnet ist oder diese mit ausbildet und an dem der Sicherheitsbügel gelagert ist.

Durch den so geschaffenen Formschluss sind die Haltekräfte, mit denen der Sicherheitsbügel in seiner Schwenkstellung arretiert ist, unabhängig von weiteren Kräften, die zum Lösen des Sicherheitsbügels aus seiner arretierten Schwenkstellung erforderlich sind. Beispielsweise kann der Vorsprung mit vergleichsweise geringen Federkräften in die Vertiefung gedrängt und in der Vertiefung gehalten werden. Zum Lösen der Arretierung müssen daher lediglich diese vergleichsweise geringen Federkräfte überwunden werden, was die Handhabung des erfindungsgemäßen Fahrrad-Lastenträgers vereinfacht.

Bevorzugt ist der Sicherheitsbügel als oder durch ein Rohr ausgestaltet. Besonders bevorzugt ist der Vorsprung in axialer Richtung des Rohres beweglich. Der erwähnte Vorsprung und / oder die erwähnte, ihm zugeordnete Feder kann beispielsweise innerhalb des Sicherheitsbügels gehalten sein, wenn der Sicherheitsbügel als Rohr ausgestaltet ist. Gegen die Federwirkung kann der Vorsprung in axialer Richtung in das oder dem Rohr bzw. tiefer in das Rohr geführt oder hineingeführt werden. So kann der Vorsprung entweder vollständig in das Rohr eintauchen oder zumindest mit einem nun geringeren Anteil aus dem Rohr herausragen.

Die Arretierung des schwenkbaren Sicherheitsbügels erfolgt in einer zweiten Ausgestaltung einerseits durch wenigstens eine als Sicherungsbohrung ausgebildete Sicherungsausnehmung und andererseits durch ein als Sicherungsstift ausgestaltetes Sicherungselement. Die Sicherungsbohrung wird aufgewiesen von dem Sicherheitsbügel oder von dem Plattformrahmen. Der Sicherungsstift ist relativ zum Sicherheitsbügel und/oder zum Plattformrahmen beweglich in der Art, dass in einer bestimmten Schwenkstellung der Sicherungsstift in oder durch die Sicherungsbohrung greift und den Sicherheitsbügel in dieser Schwenkstellung arretiert. Die zumindest eine Sicherungsbohrung erstreckt sich insbesondere in die Längsrichtung.

Bevorzugt ist der Sicherungsstift im Falle der Ausgestaltung des Sicherheitsbügels als oder durch ein Rohr in zumindest anteilig oder ausschließlich radialer Richtung des Rohres beweglich, bevorzugt in die Längsrichtung. Der Sicherungsstift ist insbesondere gegen die Wirkung der Feder aus der Sicherungsbohrung zu führen. Die zumindest eine Sicherungsbohrung erstreckt sich insbesondere durch eine sich rechtwinklig zur Schwenkachse flächig ersteckende Lochscheibe, die insbesondere Teil des Plattformrahmens oder des Sicherheitsbügels ist.

Die vorbeschriebene Anordnung des Sicherungselementes einerseits und der Sicherungsausnehmung andererseits ist im Rahmen der Erfindung auch umzukehren, sodass beispielsweise die zumindest eine Sicherungsausnehmung mit dem Sicherheitsbügel zu verschwenken ist. Unabhängig von der Ausgestaltung von dem Sicherungselement und der Sicherungsausnehmung (radial oder axial; Vorsprung oder Sicherungsstift; Vertiefung oder Sicherungsbohrung) wird letztere bevorzugt von dem Sicherheitsbügel zweiseitig umgeben.

Ein Ausführungsbeispiel der Erfindung wird anhand der rein schematischen Darstellungen nachfolgend näher erläutert. Dabei zeigt:
- Fig. 1: eine perspektivische Ansicht auf einen Fahrrad-Lastenträger mit einem schwenkbar gelagerten Sicherheitsbügel in einer ersten erfindungsgemäßen Ausgestaltung,
- Fig. 2: eine im Vergleich zu Fig. 1 vergrößerte Ansicht auf den Bereich des Schwenklagers der ersten Ausgestaltung,
- Fig. 3: eine erste perspektivische Ansicht auf den Bereich des Schwenklagers einer zweiten erfindungsgemäßen Ausgestaltung des Fahrrad-Lastenträgers,
- Fig. 4: eine zweite perspektivische Ansicht auf den Bereich des Schwenklagers der zweiten Ausgestaltung,
- Fig. 5: eine dritte perspektivische Ansicht auf den Bereich des Schwenklagers der zweiten Ausgestaltung bei teilweiser mittels gestrichtelter Linien dargestellter Transparenz.

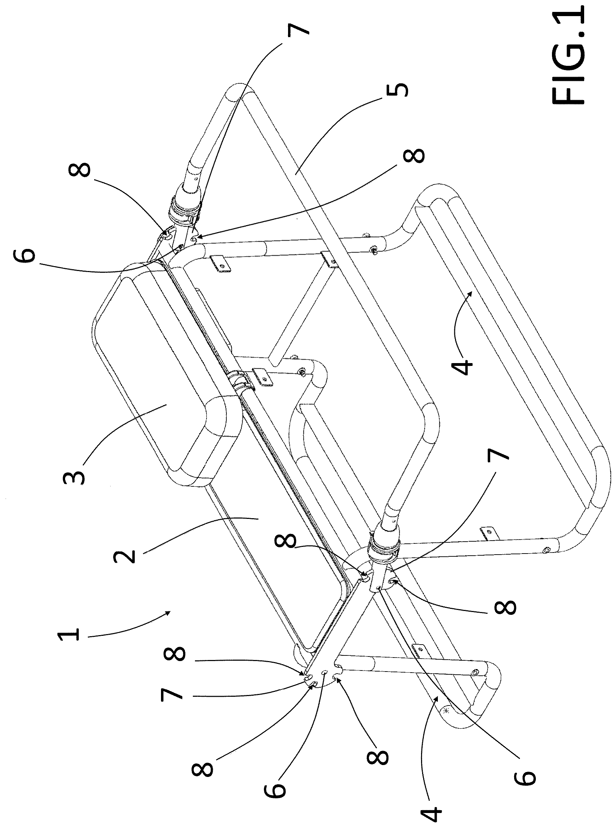

Fig. 1 zeigt einen Fahrrad-Lastenträger 1 mit einer Ladeplattform 2, der Querschnitt einen annähernd A- oder Omega-förmigen Querschnitt aufweist und dazu eingerichtet ist, über dem Rahmen-Ende eines sogenannten Long-Tail-Fahrradrahmens montiert zu werden. Abweichend von dem dargestellten Ausführungsbeispiel kann ein grundsätzlich gleicher Fahrrad-Lastenträger 1 als Bestandteil des Fahrradrahmens ausgestaltet sein. Bei dem dargestellten Ausführungsbeispiel ist der Fahrrad-Lastenträger 1 zum Transport von Personen geeignet, insbesondere von Kindern. Hierzu weist der Fahrrad-Lastenträger 1 auf der Ladeplattform 2 ein Sitzkissen 3 auf sowie an seinem unteren Ende zwei Trittleisten 4, die jeweils zwei parallele Streben aufweisen und im Gebrauch, bei montiertem Fahrrad-Lastenträger 1, beidseitig von dem Hinterrad des Fahrrads angeordnet sind.

Der Fahrrad-Lastenträger 1 weist weiterhin einen Sicherheitsbügel 5 auf, der durch Schwenklager 6 mit dem übrigen Gestell des Fahrrad-Lastenträgers 1 verbunden ist und um diese Schwenklager 6 geschwenkt werden kann. Ein zweiter Sicherheitsbügel 5 kann an dem Fahrrad-Lastenträger 1 montiert werden; die dazu erforderlichen Schwenklager 6 sind bereits vorhanden.

Konzentrisch um die Schwenklager 6 herum verläuft jeweils eine bogenförmige Kulisse 7, die mit mehreren Vertiefungen 8 an ihrem Umfang versehen ist. Diese Vertiefungen 8 bestimmen Schwenkstellungen, in denen der Sicherheitsbügel 5 jeweils arretiert werden kann.

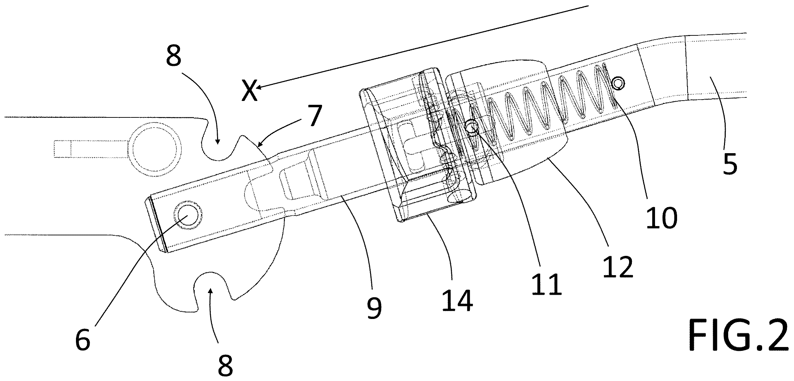

Aus Fig. 2 ist erkennbar, dass die Arretierung des Sicherheitsbügels 5 über einen Vorsprung 9 erfolgt, der als Sperrstift ausgestaltet ist und in die Vertiefungen 8 der Kulisse 7 eingreifen kann. Die Interaktion beider Elemente verhindert eine Schwenkbewegung des Sicherheitsbügels 5 um das Schwenklager 6.

Eine als Druckfeder ausgestaltet Feder 10, die im Inneren des Sicherheitsbügels 5 angeordnet ist, übt eine Kraft in Richtung X auf einen Spannstift 11 aus, welcher in einer Hülse 12 gehalten ist und sich quer durch den Sicherheitsbügel 5 erstreckt. Über eine Schrägfläche - beispielsweise in Form einer Helix - überträgt der Spannstift 11 die Kraft der Feder 10 auf eine von einer Person betätigbare Handhabe 14.

Der Vorsprung 9 ist mit der Handhabe 14 verbunden und kann über diese von einer Person betätigt werden und in seiner Position in der Art manipuliert werden, dass der Vorsprung 9 in axialer Richtung innerhalb des rohrförmigen Sicherheitsbügels 5 verlagert werden kann.

Auf die Handhabe 14 wirkt eine Kraft in Richtung X und bewirkt eine Verdrehung um die Achse des Sicherheitsbügels 5. Das Zusammenspiel der beiden Kraftrichtungen führt dazu, dass die Handhabe 14 einer L-förmigen Bahn folgt. Um den Vorsprung 9 aus einer Vertiefung 8 zu führen und den Sicherheitsbügel 5 zu entriegeln, muss somit eine Verdrehung und translatorische Bewegung der Handhabe 14 erfolgen.

Je nach Ausgestaltung der miteinander zusammenwirkenden Flächen des Vorsprungs 9, der Handhabe 14 und des Spannstifts 11 kann abweichend von dem beschriebenen Ausführungsbeispiel auch ausschließlich eine Drehbewegung der Handhabe 14 dazu dienen, den Vorsprung 9 innerhalb des rohrförmigen Sicherheitsbügels 5 zu verlagern, ohne dabei die Handhabe 14 selbst in axialer Richtung des Sicherheitsbügels 5 zu bewegen.

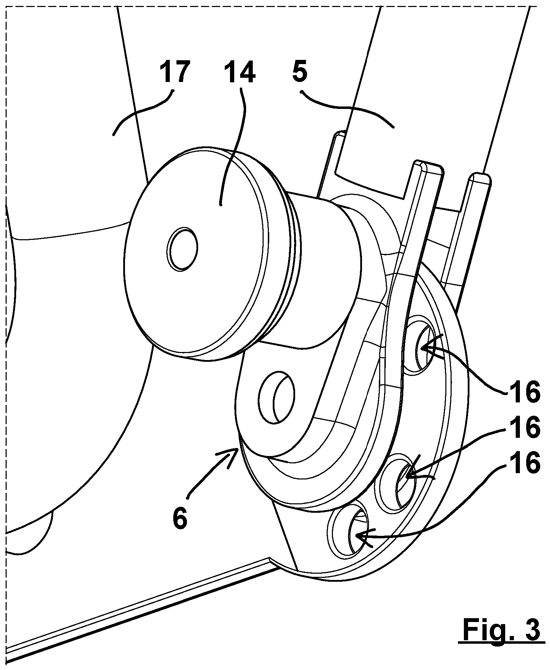

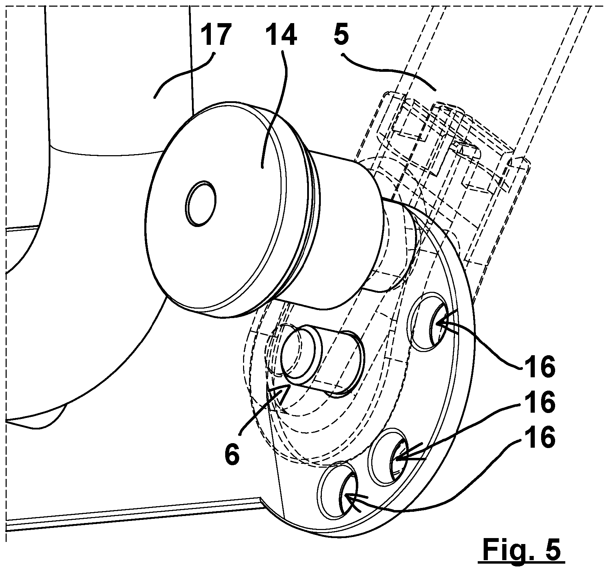

Die Fig. 3 bis 5 veranschaulichen eine zweite Ausgestaltung des erfindungsgemäßen Fahrrad-Lastenträgers 1 teilweise, die im Bereich des Schwenklagers von der vorbeschriebenen ersten Ausgestaltung gemäß den Fig. 1 und 2 abweicht. Nachfolgend werden zur Vermeidung von Wiederholungen nur solche Merkmale der zweiten Ausgestaltung beschrieben, mit denen sie von der ersten Ausgestaltung abweicht.

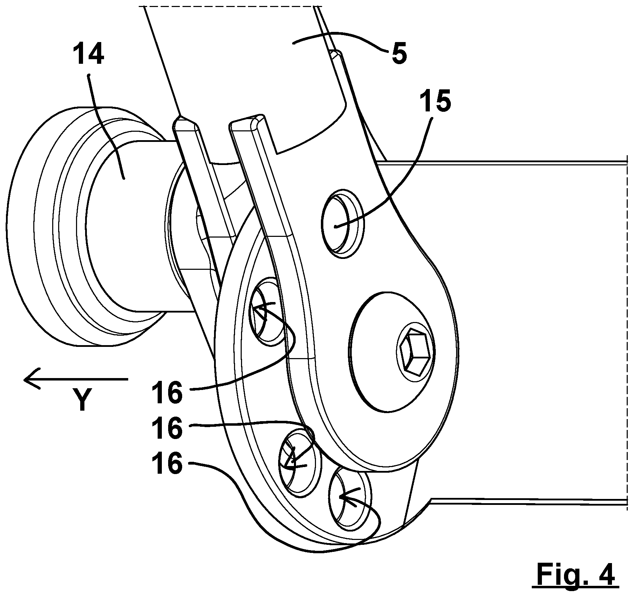

Der Sicherheitsbügel 5, von den die Fig. 3 bis 5 jeweils nur ein Ende zeigen, weist jeweils zwei Sicherungsstifte 15 auf, an denen jeweils eine Handhabe 14 angeordnet ist. Mittels der jeweiligen Handhabe 14 ist jeder Sicherungsstift 15 in die Richtung X, die der Längsrichtung des Fahrrad-Lastenträgers 1 entspricht und lokal radial zur Längserstreckung des durch ein Rohr ausgebildeten Sicherheitsbügels 5 ausgerichtet ist, beweglich. Durch die Bewegung ist der Sicherungsstift 15 von einer Sicherungsstellung (sh. Fig. 4), in der der Sicherheitsbügel 5 arretiert ist, in eine nicht dargestellte Freigabestellung zu überführen.

In der Sicherungsstellung durchgreift der Sicherungsstift 15 eine von vier Sicherungsbohrungen 16. Diese sind mit einheitlichem Abstand von der Schwenkachse und bei variierendem Winkelversatz ortsfest zur Ladeplattform 2 bzw. zum Plattformrahmen 17 angeordnet.

### Bezugszeichenliste

- 1: Fahrrad-Lastenträger
- 2: Ladeplattform
- 3: Sitzkissen
- 4: Trittleiste
- 5: Sicherheitsbügel
- 6: Schwenklager
- 7: Kulisse
- 8: Vertiefung
- 9: Vorsprung
- 10: Feder
- 11: Spannstift
- 12: Hülse
- 14: Handhabe
- 15: Sicherungsstift
- 16: Sicherungsbohrung
- 17: Plattformrahmen

## Patentansprüche

1. Fahrrad-Lastenträger (1),
mit einer zur Aufnahme von Ladung bestimmten Ladeplattform (2),
und mit einem Sicherheitsbügel (5), der schwenkbar gelagert ist,
**dadurch gekennzeichnet,**
**dass** der Sicherheitsbügel (5) in wenigstens einer Schwenkstellung wahlweise formschlüssig arretierbar oder aus dem Formschluss lösbar ist.

2. Fahrrad-Lastenträger (1) nach Anspruch 1,
**dadurch gekennzeichnet,**
**dass** eine Schwenkachse (6), um welche der Sicherheitsbügel schwenkbar ist, im Gebrauch in Längsrichtung eines Fahrrades verläuft.

3. Fahrrad-Lastenträger (1) nach Anspruch 1 oder 2,
**dadurch gekennzeichnet,**
**dass** der Sicherheitsbügel (5) ein Sicherungselement (9, 15) aufweist, welches zwischen einer Sicherungsstellung und einer Freigabestellung in der Art beweglich ist,
**dass** der Sicherheitsbügel (5) in einer Schwenkstellung, in welcher er arretiert ist, mittels des sich in seiner Sicherungsstellung befindlichen Sicherungselements (9, 15) gesichert ist und aus dieser Schwenkstellung nur lösbar ist, nachdem das Sicherungselement (9, 15) seine Freigabestellung einnimmt.

4. Fahrrad-Lastenträger (1) nach Anspruch 3,
**gekennzeichnet durch**
eine derartige Ausbildung, dass der Sicherheitsbügel (5) mittels des Sicherungselementes (9, 15) in mehreren, bevorzugt in zumindest drei, besonders bevorzugt in zumindest vier unterschiedlichen Schwenkstellungen zu sichern ist.

5. Fahrrad-Lastenträger (1) nach Anspruch 4,
**gekennzeichnet durch**
eine Sicherungsausnehmung (8, 16) zur Aufnahme des Sicherungselementes (9, 15) pro Schwenkstellung.

6. Fahrrad-Lastenträger (1) nach einem der Ansprüche 3 bis 5,
**dadurch gekennzeichnet, dass**
das Sicherungselement (9, 15) zumindest anteilig, insbesondere ausschließlich, radial oder axial bezogen auf die Schwenkachse (6) zwischen einer Sicherungsstellung und der Freigabestellung beweglich ist.

7. Fahrrad-Lastenträger (1) nach einem der Ansprüche 3 bis 6,
**dadurch gekennzeichnet,**
**dass** der Sicherheitsbügel (5) zwei Sicherungselemente (9, 15) aufweist, die dazu eingerichtet sind, dass sie nur bei gleichzeitiger Betätigung in ihre jeweilige Freigabestellung die Bewegung des Sicherheitsbügels (5) aus seiner arretierten Schwenkstellung ermöglichen.

8. Fahrrad-Lastenträger (1) nach Anspruch 7,
**dadurch gekennzeichnet,**
**dass** die beiden Sicherungselemente (9, 15) in dieselbe oder in entgegengesetzte Richtungen von der Sicherungsstellung und die Freigabestellung beweglich sind.

9. Fahrrad-Lastenträger (1) nach einem der vorhergehenden Ansprüche,
**dadurch gekennzeichnet,**
**dass** der Sicherheitsbügel (5) im Wesentlichen U-förmig verläuft und an seinen beiden Enden jeweils ein Sicherungselement (9, 15) aufweist.

10. Fahrrad-Lastenträger (1) nach einem der vorhergehenden Ansprüche,
**gekennzeichnet durch**
zumindest eine Feder (10), wobei das Sicherungselement (9, 15) gegen die Wirkung der Feder (10) führbar oder geführt ist.

11. Fahrrad-Lastenträger (1) nach einem der vorhergehenden Ansprüche,
**dadurch gekennzeichnet,**
**dass** der Sicherheitsbügel (5) oder ein zur Ladeplattform (2) ortsfester Plattformrahmen (17), an dem der Sicherheitsbügel (5) gelagert ist, eine Kulisse (7) mit wenigstens einer als Vertiefung (8) ausgebildeten Sicherungsausnehmung (8, 16) aufweist,
und **dass** das Sicherungselement als Vorsprung (9) ausgestaltet ist, der relativ zu der Kulisse (7) beweglich ist in der Art, dass in einer bestimmten Schwenkstellung der Vorsprung (9) in die Vertiefung (8) eingreift und den Sicherheitsbügel (5) in dieser Schwenkstellung arretiert.

12. Fahrrad-Lastenträger (1) nach Anspruch 11,
**dadurch gekennzeichnet,**
**dass** der Sicherheitsbügel (5) als Rohr ausgestaltet ist,
und der Vorsprung (9) in axialer Richtung des Rohrs beweglich ist,
wobei der Vorsprung (9) gegen die Wirkung der Feder (10) in das Innere und/oder in dem Inneren des Rohrs führbar ist.

13. Fahrrad-Lastenträger (1) nach einem der Ansprüche 1 bis 10,
**dadurch gekennzeichnet,**
**dass** der Sicherheitsbügel (5) oder ein zur Ladeplattform (2) ortsfester Plattformrahmen (17), an dem der Sicherheitsbügel (5) gelagert ist, wenigstens eine als Sicherungsbohrung (16) ausgebildete Sicherungsausnehmung (8, 16) aufweist,
und **dass** das Sicherungselement als Sicherungsstift (15) ausgestaltet ist, der relativ zum Sicherheitsbügel (5) und/oder zum Plattformrahmen (17) beweglich ist in der Art, dass in einer bestimmten Schwenkstellung der Sicherungsstift (15) in oder durch die Sicherungsbohrung (16) greift und den Sicherheitsbügel (5) in dieser Schwenkstellung arretiert.

14. Fahrrad-Lastenträger (1) nach Anspruch 13,
**dadurch gekennzeichnet,**
**dass** der Sicherheitsbügel (5) als Rohr ausgestaltet ist,
und der Sicherungsstift (15) in zumindest anteilig radialer Richtung des Rohrs beweglich ist,
wobei der Sicherungsstift (15) insbesondere gegen die Wirkung der Feder (10) aus der Sicherungsbohrung (16) führbar ist.
